Europäisches Patentamt

(19) European Patent Office

Office européen des brevets

(11) Publication number: **0 233 378**
**B1**

# (12) EUROPEAN PATENT SPECIFICATION

(45) Date of publication of the patent specification:
**10.05.89**

(51) Int. Cl.⁴: **A23L 1/226, A23L 1/327,**
**A23D 5/00, A23D 3/00**

(21) Application number: **86200280.5**

(22) Date of filing: **21.02.86**

(54) **Butter-like concentrate.**

(43) Date of publication of application:
**26.08.87 Bulletin 87/35**

(45) Publication of the grant of the patent:
**10.05.89 Bulletin 89/19**

(84) Designated Contracting States:
**AT BE CH DE FR GB IT LI NL SE**

(56) References cited:
EP-A- 0 173 401
CH-A- 555 143
FR-A- 1 206 821
FR-A- 2 005 896
FR-A- 2 012 745
FR-A- 2 039 923
FR-A- 2 141 538
FR-A- 2 358 110
FR-E- 91 697
US-A- 3 126 283
US-A- 3 130 204
US-A- 3 615 698
US-A- 3 780 184

FOOD TECHNOLOGY, vol. 29, no. 5, May 1975,
pages 82,84,86,88-90,92,96,98; J.E. KINSELLA: "Butter
flavor"

(73) Proprietor: **UNILEVER NV, Burgemeester
s'Jacobplein 1 P.O. Box 760, NL-3000 DK Rotterdam(NL)**

(84) Designated Contracting States: **BE CH DE FR IT LI NL SE
AT**

(73) Proprietor: **UNILEVER PLC, Unilever House Blackfriars
P.O. Box 68, London EC4P 4BQ(GB)**

(84) Designated Contracting States: **GB**

(72) Inventor: **Doornbos, Tamme, Vijverweg 3, NL-3062 JN
Rotterdam(NL)**
Inventor: **van der Heijden, Arnoldus, Tourmalijn 25,
NL-2691 TP 's-Gravenzande(NL)**
Inventor: **van der Kamp, Johannes Willem,
Tinbergenpad 5, NL-2912 BH Nieuwerkerk a/d IJssel(NL)**
Inventor: **de Rooij, Johannes Franciscus Maria, 5 Swan
Green, Sellindge, Kent TN25 6EX(GB)**

(74) Representative: **Wiesenhaan, Herman, Drs. et al,
Unilever N.V. Patent Division P.O.Box 137, NL-3130 AC
Vlaardingen(NL)**

## Description

The invention relates to butter-like concentrates and to bakery products containing such concentrates. Under bakery products are here to be understood ingredients for baking like margarines and shortenings, as well as baked products like pastries, biscuits, croissants, gateaux etc. Alsc other confectioners' products like e.g. candy, caramels etc. are included.

Different compositions usually having a meat-like flavour are well known in the art. Mostly these are prepared by heating a mixture comprising a sugar, an amino acid, cystein and/or nucleotides.

It is known from US-A 3 126 283 (Beatrice Foods Co.) to prepare a sweetened condensed product, inter alia for bakery purposes, by heating to about 90°C a mixture consisting of about 21% skimmed milk powder, 30% water, 8% fat and 40% of saccharose. The product obtained resembles sweetened condensed milk in flavour and in appearance and has high contents of water and carbohydrates (saccharose) in about 40% (w/w). Moreover, the product disclosed contains about 21% (w/w) of skimmed milk powder (dry milk solids non fat) which corresponds to about 7% of protein and 10% lactose. Consequently, the ratio of protein to carbohydrate is about 7:(40+10), i.e. about 1:7. Also the fat content is low. The product is stated to be useful, inter alia for coffee in place of cream or milk, for infant feeding, for baking and for candy making.

Also European Patent Application EP-A 85 201 339, which is not a prior publication (publication date 05.03.86), describes a butter-like concentrate which is a mildly heated mixture of 25–85% w/w of fat containing butterfat, 5–37 w/w protein, 5–37% w/w carbohydrate and 0–20% of conventional adjuvants. Conventional adjuvants are e.g. water, emulsifiers, electrolytes, flavours, etc.

It has now been found than an excellent sweet, butter-like concentrate can be obtained by mildly heating a mixture of fat (preferably containing butterfat), protein (preferably whey protein), a carbohydrate (preferably a reducing sugar) and water in certain other weight ratios also under mild conditions.

The present butter-like concentrate comprises a mixture, heated in a temperature between 70 and 140°C between 10 minutes and several hours, said mixture containing 25–98% w/w of fat or oil containing at 25% of butterfat, 2–74% w/w protein and carbohydrate taken together, and 0–20% of conventional adjuvants. It is desirable that the amount of fat is at least 25%, rather at least 50% w/w and the amount of water initially between 1 and 20%, preferably between 3 and 15%. Conventional adjuvants are e.g. water, emulsifiers, electrolytes, flavours, etc. Furthermore, the weight ratio of protein to carbohydrate is preferably between 3:1 and 1:3, more preferably between 2:1 and 1:2.

The presence of an emulsifier such as lecithin in an amount between 0.5 and 2% is desirable. The pH of the mixture before heating is normally between 5.0 and 8.0. Heating is carried out under mild conditions (typically half an hour at 100°C), but temperatures between 70 and 140°C can be used for periods of 10 minutes to several hours (the shorter periods for higher temperatures). Water should preferably remain present when preparing this reaction concentrate and the conditions of temperature and reaction time are chosen in such a way that a substantial amount of precursors of compounds typical for baked butter are obtained, so that these precursors can be converted into actual baked butter-like flavour compounds upon further heating under e.g. baking conditions.

In the butter-like concentrate the concentration of intermediate compounds, such as glycosylamines and Amadori rearranged products etc. is preferably relatively high, the amount of flavour compounds like maltols, furanones and furfurals is still relatively low. Upon further heating, these amounts increase. In particular, the amount of 5-hydroxymethyl-furfural increases upon subsequent heating of the butter-like concentrate to 135°C for 10 minutes in a closed system in such a way that, after the subsequent heating, at least a six-fold quantity is present. Also the amounts of maltols increase.

Preferably at least a ten-fold quantity of 5-hydroxymethyl-furfural is formed. 5-Hydroxymethyl-furfural is especially formed when hexoses are used as the starting material, whereas furfural is predominantly formed when pentoses are used. The amounts of maltols increase less rapidly than 5-hydroxymethyl-furfural, but, after subsequent heating at 135°C for 10 minutes, at least a two-fold quantity (often at least a three-fold quantity) has been observed.

The butter-like concentrate so obtained is a yellowish to brownish fatty paste at room temperature which is stable upon storage.

An advantage of using a butter-like concentrate according to the present invention instead of adding a butter flavour to the bakery products, is that when adding the butter-like concentrate the flavour is being developed, instead of being partially lost during baking. Another major advantage of this butter-like concentrate is that it is made from ingredients normally used in bakery products using processes which fall under the scope of the proposed EEC definition for natural flavouring materials.

The butter-like concentrate according to the present invention is therefore used with advantage in bakery products such as bakery margarines, bakery fats, shortenings, improved flour, cake mixes, baking aids and premixes, doughs (e.g. deep frozen) etc. and imparts upon actual baking an excellent sweet, butter-like impression.

One embodiment of the present invention is therefore the butter-like concentrate and its preparation, whereas other embodiments of the invention are bakery products such as bakery ingredients, as well as actually baked products, other confectioners' products and their preparation. As to the amount of butter-like concentrate used in bakery products, it is of course the amount of butter-like concentrate in the baked product or confectionery product which counts and this amount is from 50 to 20,000 ppm ($1:10^6$), preferably between 500 and 10,000 ppm (excluding water).

In bakery ingredients such as margarine, especially bakers' margarine, the concentration is correspondingly higher, usually between 0.5 and 100 parts per thousand, preferably between 1 and 50 parts per thousand.

The starting materials of the butter-like concentrate are oils and preferably low-melting fats containing preferably at least 25%, rather at least 50%, butterfat. Also hydrogenated oils like soyabean oil, palmoil, palmkernel oil, coconut oil etc. are suitable especially in addition to butterfat.

As protein material, milk protein is preferred, in particular whey protein, skimmed milk powder etc. Casein alone is less suitable. The protein is preferably spray-dried, demineralized and not denatured. The carbohydrate employed can be a monosaccharide or a disaccharide. E.g. glucose, lactose, maltose and galactose are suitable. Monosaccharides are preferred, hexoses and pentoses in particular. These ingredients sometimes contain enough water to prepare the concentrate, so that adding water is not always necessary.

It is preferred to employ an emulsifier, and lecithin or mono/diglycerides are such conventional adjuvants which are suitable for this purpose. It is preferred to use 1–20% of water. Sometimes it is advantageous to add electrolyte, e.g. phosphate, to speed up the formation of flavour precursors.

The butter-like concentrate according to the present invention is a turbid paste having a Gardner colour (1963) estimated between 12 and 20, preferably between 15 and 18. Another method to characterize colour is Hunterlab, which yielded the following parameters: $L = 50$, $a/b = 0.4$, $(a^2+b^2)^{1/2} = 20$.

This paste can be easily worked into the fatty phase of a margarine, shortening etc. in the amounts specified above. Known flavouring ingredients like diacetyl, lower lactones etc. may also be added.

Sometimes it is advantageous to work up the product in a colloid mill or a knife mill. For certain applications it is recommended that the solids be removed, e.g. by filtration.

By using standard recipes, it is possible to prepare baked products with an improved butter-like impression by using the butter-like concentrate according to the present invention.

Example 1

600 kg butterfat were melted in a reaction vessel equipped with a water-cooled condenser, together with

4.9 kg partially hydrolyzed soya lecithin (degree of hydrolysis of 45%)

6.2 kg undenaturated whey concentrate (containing 78% protein, 4% lactose and 5.5% water) obtained by ultrafiltration and spray-drying, and

6.2 kg anhydrous glucose, followed by

2.8 kg demineralized water.

The temperature was then increased to 108–110°C in 20 minutes and the mixture kept at this temperature for 15 minutes. Volatiles were refluxed. The mixture was then cooled to 60°C and filtered to remove the solids. The concentrate so obtained had a sweet, butter-like flavour.

Example 2

600 kg butterfat were melted in a reaction vessel equipped with a water-cooled condenser, together with

5.3 kg partially hydrolyzed soya lecithin (degree of hydrolysis of 45%)

22.4 kg undenatured whey concentrate (containing 78% protein, 4% lactose and 5.5% water) obtained by ultrafiltration and spray-drying, and

22.4 kg anhydrous glucose, followed by

8.6 kg demineralized water.

The temperature was then increased to 108–110°C in 18 minutes and the mixture kept at this temperature for 20 minutes. Volatiles were refluxed. The mixture was then cooled to 60°C and taken to a colloid mill and subsequently milled in a knife mill at 65–70°C. The brownish paste-like product developed a pronounced baked butter-like flavour upon further heating to 135°C.

Example 3

A bakery margarine for croissants (or so-called Danish pastry margarine) was prepared over a scraped-surface heat exchanger (Votator) from an aqueous phase (17% w/w) consisting of:

84 % demineralized water
2.4% modified starch
5.5% salt
5.5% saccharose
0.4% citric acid
0.2% potassium sorbate.
To the margarine were added:
8 ppm diacetyl
6750 ppm butter-like concentrate of Example 2,
and a fat phase (83% ww) consisting of:
40% hardened palm oil (m.p. 42°C)
30% hardened rapeseed oil (m.p. 32°C)
15% soyabean oil
15% lard.

Example 4

Croissants were prepared from a dough of the following composition:

1000 g flour
40 g bakers yeast
25 g salt
100 g saccharose
300 g demineralized water
300 g milk.

The dough was kneaded. After this had been done, it was put into a tin and covered to prevent crusting. For fermenting, the dough was kept at room temperature for one hour. Then the dough was broken and put into a refrigerator and kept there overnight. The dough was then cut into pieces. For turning the dough, a piece was spread out in a rectangle and half of it was covered with the margarine (in total 500 g of the pastry margarine of Example 3) which previously had been tempered.

Then the spread dough was folded in two, covering the margarine and joining the edges. It was then given a turn, folded in four (that means a simple turn and a double turn). The dough was rolled to a thickness of about 3 mm.

For shaping, the dough was cut into strips of 20 cm width and divided into triangles of 40 to 50 g of dough. The croissants were cut in very lengthened triangles having a height of 18 to 20 cm and a base of 9 to 10 cm. They were then rolled up several times around themselves.

For further fermentation, the croissants were allowed to rise under the shelter of the draught or in a prover between 30 and 35°C. Baking was carried out briskly (at about 250°C) without any damp for about twelve minutes. The croissants were washed twice with eggs, once before the last fermentation.

In the same way, blank croissants, i.e. without butter-like concentrate, were baked and the two types were compared as to butter-like smell and butter-like taste by a panel consisting of 25 experienced members. The outcome was that 2 persons indicated no preference. Two tasters preferred the blank croissants, while 21 persons indicated a more butter-like croissant for the product containing the butter-like concentrate.

Example 5

The butter-like concentrates obtained according to Examples 1 and 2 had a sweet flavour slightly reminiscent of butter, but upon further heating at higher temperatures, i.e. baking temperatures, a pronounced sweet, baked butter-like flavour developed. The yellowish/brownish pastes consequently contained an appreciable amount of precursors of the sweet, butter-like flavour, as is evidenced by the fact that upon further heating to 135°C for 10 minutes in a closed system, further amounts of especially 5-hydroxymethyl-furfural were formed. Also further amounts of maltols were formed.

By degassing the concentrates as such and also after heating as described above, using a technique described in J.A.O.C.S. 38 (1061), 40–44, the volatiles were collected and subsequently analysed by gas chromatography and mass spectrometry. It was established that an 8.5-fold quantity of 5-hydroxymethyl-furfural was present for the paste of Example 1, whereas for the paste of Example 2 a 12.3-fold quantity of 5-hydroxymethyl-furfural and a 2.3-fold quantity of maltol were present.

Claims

1. A butter-like concentrate comprising a mixture, heated to a temperature between 70 and 140°C between 10 minutes and several hours, said mixture containing 25–98% (w/w) of an oil or fat containing at least 25% of butterfat, 2–10%, preferably 4–9% (w/w) of protein and carbohydrate taken together, and 0–20% (w/w) of conventional adjuvants.

2. A concentrate according to claim 1, characterized in that the weight ratio of protein to carbohydrate is between 3:1 and 1:3, preferably between 2:1 and 1:2.

3. A concentrate according to claim 1 or 2, characterized in that the protein comprises milk protein.

4. A concentrate according to any of the preceding claims, characterized in that the carbohydrate comprises a monosaccharide.

5. A concentrate according to any of the preceding claims, characterized in that the solids (non-fat) have been removed.

6. A concentrate according to any of the preceding claims, in which 5-hydroxymethyl-furfural is present and precursors thereof are present so that, upon subsequent heating of the concentrate to 135°C for 10 minutes in a closed system, at least a six-fold amount of 5-hydroxymethyl-furfural is present.

7. A concentrate according to any of the preceding claims, in which maltol is present and precursors thereof are present so that, upon subsequent heating of the concentrate to 135°C for 10 minutes in a closed system, at least a two-fold amount of maltol is present.

8. Bakery products, characterized in that said products contain a butter-like concentrate according to any one of the preceding claims.

Patentansprüche

1. Butterähnliches Konzentrat, das eine Mischung umfaßt, die zwischen 10 min und einigen Stunden auf eine Temperatur zwischen 70 und 140°C erhitzt wurde, wobei die Mischung 25 bis 98% (Gew./Gew.) eines mindestens 25% Butterfett enthaltenden Öles oder Fettes, 2 bis 10%, vorzugsweise 4 bis 9% (Gew./Gew.) Protein und Kohlenhydrat, zusammen genommen, und 0 bis 20% (Gew./Gew.) übliche Hilfsmittel enthält.

2. Konzentrat nach Anspruch 1, dadurch gekennzeichnet, daß das Gewichtsverhältnis von Protein zu Kohlenhydrat zwischen 3:1 und 1:3, vorzugsweise zwischen 2:1 und 1:2, liegt.

3. Konzentrat nach einem der Ansprüche 1 oder 2, dadurch gekennzeichnet, daß das Protein Milchprotein umfaßt.

4. Konzentrat nach irgendeinem der vorhergehenden Ansprüche, dadurch gekennzeichnet, daß das Kohlenhydrat ein Monosaccharid umfaßt.

5. Konzentrat nach irgendeinem der vorhergehenden Ansprüche, dadurch gekennzeichnet, daß die (Nicht-Fett-) Feststoffe entfernt worden sind.

6. Konzentrat nach irgendeinem der vorhergehenden Ansprüche, dadurch gekennzeichnet, daß 5-Hydroxymethyl-furfural anwesend ist und Vorläufer desselben anwesend sind, so daß nach anschließendem Erhitzen des Konzentrates auf 135°C für 10 min in einem geschlossenen System mindestens die 6fache Menge an 5-Hydroxymethyl-furfural anwesend ist.

7. Konzentrat nach irgendeinem der vorhergehenden Ansprüche, dadurch gekennzeichnet, daß Maltol anwesend ist und Vorläufer desselben anwesend sind, so daß nach anschließendem Erhitzen des Konzentrates auf 135°C für 10 min in einem geschlossenen System mindestens eine 2fache Menge an Maltol anwesend ist.

8. Bäckereiprodukte, dadurch gekennzeichnet,
daß sie ein butterähnliches Konzentrat nach irgendeinem der vorhergehenden Ansprüche enthalten.

**Revendications**

1. Concentré analogue au beurre comprenant un
mélange chauffé à une température comprise entre
70 et 140°C pendant une durée allant de 10 minutes à
plusieurs heures, ledit mélange contenant de 25 à
98% en poids d'une huile ou graisse renfermant au
moins 25% de graisse de beurre, de 2 à 10%, de préférence de 4 à 9% en poids, de protéines et d'hydrates de carbone conjointement, et de 0 à 20% en
poids d'adjuvants classiques.

2. Concentré selon la revendication 1, caractérisé en ce que le rapport pondéral des protéines aux
hydrates de carbone est compris entre 3:1 et 1:3, de
préférence entre 2:1 et 1:2.

3. Concentré selon la revendication 1 ou 2, caractérisé en ce que les protéines comprennent des protéines de lait.

4. Concentré selon l'une quelconque des revendications précédentes, caractérisé en ce que les
hydrates de carbone comprennent un monosaccharide.

5. Concentré selon l'une quelconque des revendications précédentes, caractérisé en ce que les matières solides (autres que les graisses) ont été éliminées.

6. Concentré selon l'une quelconque des revendications précédentes, dans lequel le 5-hydroxyméthyl-furfural est présent et les précurseurs de celui-ci sont présents, de sorte que, lors du chauffage ultérieur, du concentré à 135°C, pendant 10
minutes, dans un système clos, au moins une quantité sextuple de 5-hydroxyméthyl-furfural est présente.

7. Concentré selon l'une quelconque des revendications précédentes, dans lequel le maltol est présent et les précurseurs de celui-ci sont présents,
de sorte que, lors du chauffage ultérieur du concentré, à 135°C, pendant 10 minutes, dans un système clos, une quantité au moins double de maltol est
présente.

8. Produits de boulangerie, caractérisés en ce
que lesdits produits contiennent un concentré analogue au beurre selon l'une quelconque des revendi-
cations précédentes.